(19) Europäisches Patentamt
European Patent Office
Office européen des brevets

(11) Publication number: **0 262 209 B1**

(12) **EUROPEAN PATENT SPECIFICATION**

(45) Date of publication of patent specification: **05.08.92**

(51) Int. Cl.5: **A01N 57/24**, A01N 57/22, A01N 57/20, A01N 57/08, A01N 57/06, A01N 57/04, A01N 53/00, A01N 41/04, A01N 37/30, C07C 233/00, C07C 235/00

(21) Application number: **87902947.8**

(22) Date of filing: **30.03.87**

(86) International application number: **PCT/US87/00648**

(87) International publication number: **WO 87/05781 (08.10.87 87/22)**

# (54) SYNERGISTIC PLANT GROWTH REGULATOR COMPOSITIONS.

(30) Priority: **31.03.86 US 846392**
**04.03.87 US 17150**

(43) Date of publication of application: **06.04.88 Bulletin 88/14**

(45) Publication of the grant of the patent: **05.08.92 Bulletin 92/32**

(84) Designated Contracting States: **AT BE CH DE FR GB IT LI NL SE**

(56) References cited:
**FR-A- 2 404 397**
**US-A- 3 072 473**

(73) Proprietor: **RHONE POULENC NEDERLAND B.V.**
**Draaistroom 1 Postbus 10**
**NL-1180 AA Amstelveen(NL)**

(72) Inventor: **SEE, Raymond, Michael**
**Rural Route 1 Box 132 B**
**Franklinton, NC 27525(US)**
Inventor: **FRITZ, Charles, David**
**8717 Wellsley Way**
**Raleigh, NC 27612(US)**
Inventor: **MANNING, David, Treadway**
**102 Summerwinds Drive**
**Cary, NC 27511(US)**
Inventor: **WHEELER, Thomas, Neil**
**8605 Woodlawn Drive**
**Raleigh, NC 27612(US)**
Inventor: **COOKE, Anson, Richard**
**1210 Huntsman Drive**
**Durham, NC 27713(US)**

(74) Representative: **Brachotte, Charles**
**RHONE-POULENC AGROCHIMIE DPI BP 9163**
**F-69263 Lyon Cedex 09(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

Technical Field

This invention relates to synergistic plant growth regulator compositions and to the use of said compositions for inducing plant growth regulating responses or ethylene responses or ethylene-type responses.

Background of the Invention

Plant growth regulating responses involving the inducement of an ethylene response or ethylene-type response have been known for some time in the art and include, for example, increasing yields, abscission of foliage and fruit, increasing flowering and fruiting, prevention of lodging, disease resistance and other responses.

Ethylene response or ethylene-type response inducing agents which have been used to achieve certain of these plant growth regulating responses include, for example, the following: certain phosphonic acid compounds as described in U.S. Patents 3,879,188, 4,240,819, 4,352,869, 4,374,661 and 4,401,454; certain 2-haloethanesulphinic acid compounds as described in U.S. Patent 3,885,951; certain beta-chloro- and beta-bromoethanesulfinic acids and esters as described in U.S. Patent 3,927,062; mixtures of a N-heterocyclic amide and a haloalkyl silane as described in U.S. Patent 4,332,612; mixtures of a N-heterocyclic amide and a 2-haloethylsulfinate as described in U.S. Patent 4,359,334; and gaseous ethylene as described by Parihar, N.S., Hormonal Control of Plant Growth, pp. 69-79 (1964).

Certain malonic acid derivative compounds have been described in the art as capable of providing plant growth regulating responses. U.S. Patent 3,072,473 describes N-arylmalonamic acids and their esters and salts, N, N'-diarylmalonamides, N-alkyl-N-arylmalonamic acids and their esters and salts, and N, N'-dialkyl-N, N'-diarylmalonamides which may be useful as plant growth regulants and herbicides. Japanese Patent 84 39,803 (1984) describes malonic acid anilide derivative compounds which may be useful as plant growth regulators. The plant growth regulating properties of substituted malonyl monoanilides are described by Shindo, N. and Kato, M., Meiji Daigaku Noogaku-bu Kenkyu Hokoku, Vol. 63, pp. 41-58 (1984).

However, plant growth regulating compositions containing (1) an ethylene response or ethylene-type response inducing agent and (2) a malonic acid derivative compound, which compositions provide synergistic plant growth regulating responses as described herein, have not been disclosed in the art.

Accordingly, it is an object of this invention to provide novel synergistic plant growth regulating compositions. It is another object of this invention to provide a method for the use of the novel plant growth regulating compositions to achieve synergistic plant growth regulating responses. These and other objects will readily become apparent to those skilled in the art in light of the teachings herein set forth.

Disclosure of the Invention

This invention relates to synergistic plant growth regulator compositions and to the inducement of a synergistic plant growth regulating response or an ethylene response or an ethylene-type response through the application of a synergistic plant growth regulator composition at the plant site.

In particular, this invention relates to synergistic plant growth regulator compositions containing (i) an ethylene response or ethylene- type response inducing agent, comprising the 2-chloroethylphosphonic acid, its derivatives and corresponding salts and esters, (ii) a cyclopropylmalonanilate derivative compound having the formula 1 :

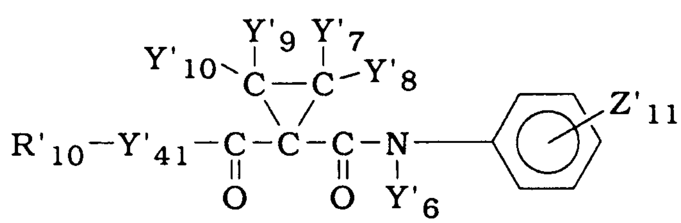

wherein $Z'_{11}$, $Y'_6$, $Y'_7$, $Y'_8$, $Y'_9$, $Y'_{10}$, $Y'_{41}$ and $R'_{10}$ are defined hereinafter, and in which the amount of compound (ii) used with agent (i) results in a mixture having a greater plant growth regulating effect than the

sum total plant growth regulating effect of agent (i) and compound (ii) used alone.

This invention further relates to a method for regulating plant growth by applying to the plant a synergistic plant growth regulator composition containing (i) an ethylene response or ethylene- type response inducing agent, comprising the 2-chloroethylphosphonic acid, its derivatives and corresponding salts and esters, (ii) a cyclopropylmalonanilate derivative compound having the formula 1 :

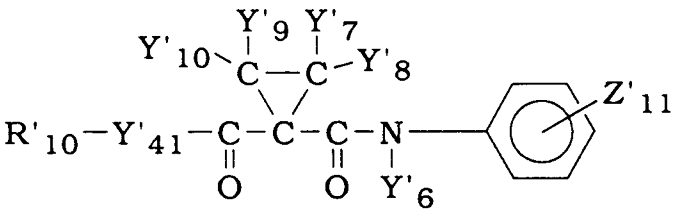

wherein $Z'_{11}$, $Y'_6$, $Y'_7$, $Y'_8$, $Y'_9$, $Y'_{10}$, $Y'_{41}$ and $R'_{10}$ are defined hereafter, and in which the amount of compound (ii) used with agent (i) results in a mixture having a greater plant growth regulating effect than the sum total plant growth regulating effect of agent (i) and compound (ii) used alone.

Detailed Description

As indicated above, this invention relates to synergistic plant growth regulator compositions and to a method for inducing synergistic plant growth regulating responses by applying a synergistic plant growth regulator composition at the plant site. More particularly, this invention relates to plant growth regulator composition comprising (i) an ethylene response or ethylene-type response inducing agent, comprising the 2-chloroethylphosphonic acid, its derivatives and corresponding salts and esters, (ii) a cyclopropylmalonanilate derivative compound having the formula 1

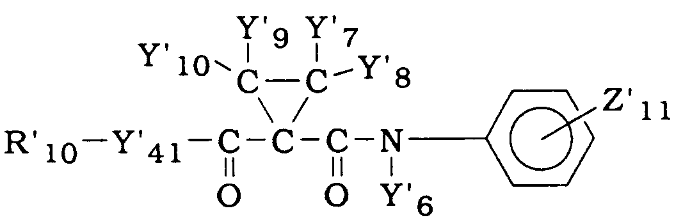

wherein:

$Z'_{11}$ is the same or different and is one or more hydrogen or halogen, or substituted or unsubstituted, haloalkyl, polyhaloalkyl, polyhaloalkoxy, alkyl, alkoxy, alkylthio, alkylsulfonyl, alkylsulfinyl, aryl, aryloxy, arylthio, arylsulfonyl, nitro, cyano, dialkoxyphosphinyl, acyl, aroyl, alkoxycarbonyl, alkoxycarbonylalkyl, acylamino, sulfonylamino, alkylsulfonylamino, acyloxy, alkenyl or -CH = CHCH = CH-;

$Y'_6$ is hydrogen or alkyl ;

$Y'_7$, $Y'_8$, $Y'_9$ and $Y'_{10}$ are independently hydrogen, halogen or alkyl;

$Y'_{41}$ is O,S, or NH;

$R'_{10}$ is hydrogen, ammonium, alkylammonium, polyalkylammonium, hydroxyalkylammonium, poly-(hydroxyalkyl)ammonium an alkali metal or alkaline earth metal or substituted or unsubstituted alkyl, hydroxyalkyl, alkoxyalkyl, alkoxycarbonylalkyl, alkylaminoalkyl, dialkylaminoalkyl, aryl, mercaptoalkyl, alkylthioalkyl, arylthioalkyl, aryloxyalkyl, alkylsylfonylalkyl, alkylsulfinylalkyl, acylalkyl, aroylalkyl, dialkoxyphosphinylalkyl, diaryloxyphosphinylalkyl, hydroxyalkylthioalkyl, hydroxyalkylsulfonylalkyl, alkoxyalkylthioalkyl, alkoxyalkylsulfonylalkyl, poly(oxyalkylene)alkyl, cyanoalkyl, nitroalkyl, alkylideneamino, carbamoylalkyl, alkylcarbamoylalkyl, dialkylcarbamoylalkyl, aminoalkyl, acylaminoalkyl, acyloxyalkyl, alkoxycarbonylaminoalkyl, cyanoaminoalkyl, carbamoyloxyalkyl, alkylcarbamoyloxyalkyl, dialkylcarbamoyloxyalkyl, alkoxycarbonyloxyalkyl, alkoxycarbonylthioalkyl, aminosulfonylalkyl, alkylaminosulfonylalkyl or dialkylaminosulfonylalkyl ;

in which the amount of compound (ii) used with agent (i) results in a mixture having a greater plant growth regulating effect than the sum total plant growth regulating effect of agent (i) and compound (ii) used alone.

Illustrative cyclopropylmalonanilate derivative compounds within the scope of formula 1 which may be

used in the synergistic plant growth regulator compositions of this invention are included in Tables 1 and 2 below.

TABLE I

Representative Malonic Acid Derivative Compounds

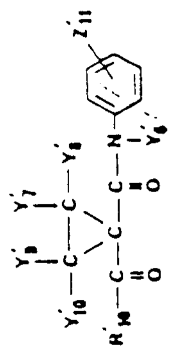

| $Y'_7$ | $Y'_8$ | $Y'_9$ | $Y'_{10}$ | $Y'_6$ | $R'_{10}$ | $Z'_{11}$ |
|---|---|---|---|---|---|---|
| H | H | H | H | H | OH | $2-C_2H_5-4-Cl$ |
| H | H | H | H | H | $OCH_3$ | $2-C_2H_5-4-Cl$ |
| H | H | H | H | H | OH | $2-C_2H_5-4-Br$ |
| H | H | H | H | H | $OC_2H_5$ | $2-C_2H_5-4-Br$ |
| H | H | H | H | $CH_3$ | OH | 4-Cl |
| H | H | H | H | $CH_3$ | ONa | 4-Br |
| H | H | H | H | $CH_3$ | OH | $3,4-Cl_2$ |
| H | H | H | H | $CH_3$ | $OC_2H_5$ | 2-Cl-4-Br |
| H | H | H | H | $CH_3$ | OH | 2-F-4-Br |
| H | H | H | H | H | OH | 3-F-4-Cl |
| H | H | H | H | H | $OCH_3$ | 3-F-4-Br |
| H | H | H | H | H | $NH_2$ | $2-CH_3-4-Br$ |
| H | H | H | H | H | $ONH_4$ | $2-CH_3-4-Br$ |
| H | H | $CH_3$ | H | H | OH | 2-F-4-Cl |
| Cl | Cl | $CH_3$ | H | H | OK | $2-CH_3-4-Cl$ |

TABLE 1 (Cont.)

Representative Malonic Acid Compounds

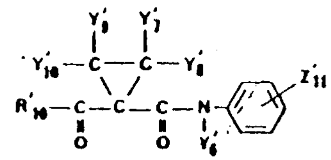

| $Y'_7$ | $Y'_8$ | $Y'_9$ | $Y'_{10}$ | $Y'_6$ | $R'_{10}$ | $Z'_{11}$ |
|---|---|---|---|---|---|---|
| H | H | $CH_3$ | $CH_3$ | H | $OC_2H_5$ | 2,4-$Cl_2$ |
| $CH_3$ | $CH_3$ | $CH_3$ | $CH_3$ | H | ONa | 2-$CH_3$-4-Br |
| $CH_3$ | H | H | H | H | OH | 4-Cl |
| $CH_3$ | $CH_3$ | H | H | H | $ONH_4$ | 2-$C_2H_5$-4-Cl |
| Cl | H | H | H | H | OH | 2-F-4-Br |
| Cl | Cl | H | H | H | $OCH_3$ | 2,4-$Br_2$ |
| Cl | Cl | $CH_3$ | $CH_3$ | H | OH | 4-Cl |
| H | H | H | H | H | OH | 2-$CH_3O$-4,5-$Cl_2$ |
| H | H | H | H | H | OH | 2-$CH_3O$-3,5-$Cl_2$ |
| H | H | H | H | H | ONa | 2-$CF_3$-4-Cl |
| H | H | H | H | H | $OCH_3$ | 2-$CF_3O$-4-$CF_3$ |
| H | H | H | H | H | OK | 2-F-4-I |
| H | H | H | H | H | OH | 3-Br-4-Cl |
| $C_2H_5$ | H | H | H | H | OH | 2-$CH_3$-4-Br |
| H | H | $CH_3$ | $CH_3$ | H | $OC_2H_5$ | 2,4-$Cl_2$ |
| $CH_3$ | $CH_3$ | $CH_3$ | $CH_3$ | H | ONa | 2-$CH_3$-4-Br |
| Cl | Cl | $CH_3$ | $CH_3$ | H | OH | 4-Cl |

TABLE 2

Representative Malonic Acid Derivative Compounds

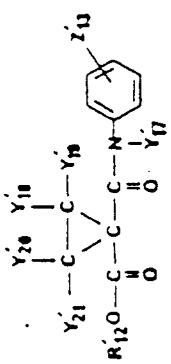

| $Y'_{18}$ | $Y'_{19}$ | $Y'_{20}$ | $Y'_{21}$ | $Y'_{17}$ | $Z'_{13}$ | $R'_{12}$ |
|---|---|---|---|---|---|---|
| H | H | H | H | H | $4-CH_3-4-Br$ | $OCH_2CH_2OCH_3$ |
| H | H | H | H | H | $2-CH_3-4-Br$ | $OCH_2CH_2OH$ |
| H | H | H | H | H | 4-Cl | $OCH_2CH_2SO_2CH_3$ |
| H | H | H | H | H | 2-Cl-4-Br | $OCH_2COCH_3$ |
| H | H | H | H | H | 2-F-4-Br | $OCH(CH_3)C\equiv N$ |
| H | H | H | H | H | $2-CH_3-4-Br$ | $OCH_2CH_2SO_2CH_2OH$ |
| H | H | H | H | $CH_3$ | $3,4-Br_2$ | $OCH_2CH_2OH$ |
| $CH_3$ | $CH_3$ | $CH_3$ | H | H | 4-Br | $O-N=CHCH_3$ |
| Cl | Cl | $CH_3$ | H | H | $2,4-Cl_2$ | $OCH_2CONH_2$ |
| H | H | $CH_3$ | $CH_3$ | $CH_3$ | 4-Cl | $SCH_3$ |
| $CH_3$ | H | $CH_3$ | $CH_3$ | H | 3-F-4-Cl | $SCH_2CO_2CH_3$ |
| Cl | Cl | $CH_3$ | $CH_3$ | H | $2-CF_3-4-Br$ | $OCH_2CH_2OH$ |
| H | H | H | H | H | $2,4-Br_2$ | $OCH_2CH_2OCH_2CH_2OH$ |
| H | H | H | H | H | 3-Br-4-Cl | $SC_6H_5$ |
| H | H | H | H | H | $2-CF_3O-4-F$ | $OCH_2CH_2OH$ |
| H | H | H | H | H | $2-CF_3-4-I$ | $OCH_2COCH_3$ |

It is appreciated that the particular compounds listed in Tables 1 and 2 hereinabove are illustrative of cyclopropylmalonanilate derivative compounds which can be used in the synergistic plant growth regulator compositions of this invention. The synergistic plant growth regulator compositions of this invention are not to be construed as being limited only to these particular compounds ; but rather, the compositions of this invention include those cyclopropylmalonanilate derivative compounds encompassed within formula 1

hereinabove.

The cyclopropylmalonanilate derivative compounds encompassed within formula 1 and intermediate compounds used in the preparation thereof can be prepared by reacting appropriate starting ingredients in accordance with conventional methods known in the art, and many may be available from various suppliers. Novel cyclopropylmalonanilate derivative compounds encompassed within formula 1 which can be used in the synergistic plant growth regulator compositions of this invention are described in copending U. S. Patent Application Serial n° (D-15299), filed on an even date herewith, and also U.S. Patent Application Serial n° (D-15328), filed on an even date herewith both of which are incorporated herein by reference The above-mentioned U. S. Serial n° (D-15299) corresponds to the International Application published WO-A-87/05897, while the U. S. Serial n° (D-15328) corresponds to the International Application published WO-A-87/05898.

These novel cyclopropylmalonanilate derivative compounds can be prepared by reacting appropriate starting ingredients in accordance with conventional methods known in the art.

Illustrative procedures which can be employed in preparing cyclopropylmalonanilate derivative compounds encompassed within formula 1 and intermediate compounds used in the preparation thereof are described, for, example, in the following : Richter, G. H. Textbook of Organic Chemistry, Third Edition, John Wiley and Sons, New York, page 486.

The ethylene response or ethylene-type response inducing agents which can be used in the synergistic plant growth regulator compositions of this invention are the 2-chloroethylphosphonic acid, its derivatives and corresponding salts and esters.

U.S. Patents 3,879,188, 4,240,819, 4,352,869, 4,374,661, and 4,401,454 describe the phosphonic acid derivative compounds such as ethephon and the plant growth regulating properties thereof. These patents are incorporated herein by reference.

With reference, to 2-chloroethylphosphonic acid derivatives, utilized in the synergistic plant growth regulator compositions of this invention, preferred half-esters of the phosphonic acid moity include the 2-chloroethyl mono-ester and the o-hydroxyphenyl mono-ester. Preferred diesters include the diphenyl and the bis(2-oxo-1-pyrrolidinyl-methyl) esters and as mixed esters, the 2-hydroxyphenyl ester with an alkyl or alkenyl or aryl radical,' for example, ethyl, isopropyl, propynyl, butyl, octyl, hexadecyl or phenyl radicals. Aryl groups are preferably monocyclic, and bi-or polycyclic aryl groups may be used provided a group to render them soluble (e.g. a sulphonate group), is present thereon.

Preferred cyclic esters include those formed with pyrocatechol or mono- or polyhalopyrocatechol derivatives, for example, 4-chloropyrocatechol or tetrachloropyrocatechol ; with salicyclic acid, with saligen ; and with 2,3-pyridinediol.

Specific ethephon derivative compounds usable in the synergistic compositions for regulating plant growth include:

**1**- The bis(acid chloride) of 2-chloroethylphosphonic acid
**2**- The pyrocatechol cyclic ester of 2-chloroethylphosphonic acid
**3**- The 4-chloropyrocatechol cyclic ester of 2-chloroethylphosphonicacid
**4**- The mixed ethyl and 2-hydroxyphenyl diester of 2-chloroethylphosphonic acid
**5**- The mixed butyl and 2-hydroxyphenyl diester of 2-chloroethylphosphonic acid
**6**- The mixed propynyl and 2-hydroxyphenyl diester of 2-chloroethylphosphonic acid
**7**- The 2-chloroethyl monoester of 2-chloroethylphosphonic acid
**8**- The bis(phenyl)ester of 2-chloroethylphosphonic acid
**9**- The tetrachloropyrocatechol cyclic ester of 2-chloroethylphosphonic acid
**10**- The saligen cyclic ester of 2-chloroethylphosphonic acid
**11**- Salicyclic acid cyclic ester of 2-chloroethylphosphonic acid
**12**- The 3-hydroxyphenyl monoester of 2-chloroethylphosphonic acid (which exists in polymeric form)
**13**- The bis(2-oxo-pyrrolidinylmethyl)ester of 2-chloroethylphosphonic acid
**14**- The o-hydroxyphenyl monoester of 2-chloroethylphosphonic acid
**15**- The mixed isopropyl and 2-hydroxyphenyl diester of 2-chloroethylphosphonic acid.
**16**- The mixed octyl and 2-hydroxyphenyl diester of 2-chloroethylphosphonic acid
**17**- The mixed hexadecyl and 2-hydroxyphenyl diester of 2-chloroethylphosphonic acid
**18**- The mixed tridecyl and 2-hydroxyphenyl diester of 2-chloroethylphosphonic acid
**19**- The anhydride of 2-chloroethylphosphonic acid
**20**- 2-chloroethylphosphonic acid
**21**- The mixed butyl and 2-hydroxyphenyl diester of 2-chloroethylphosphonic acid

Other useful 2-chloroethylphosphonic acid derivatives include the mixed phenyl and 2-hydroxyphenyl diester of 2-chloroethylphosphonic acid, the bis(pentachlorophenyl) ester of 2-chloroethylphosphonic acid, the 2,3-pyridinedio cyclic ester of 2-chloroethylphosphonic acid, and salts. Examples of such salts include

the sodium, aluminium, zinc, potassium and lithium salts.

The synergistic plant growth regulator compositions of this invention can display a wide variety of plant growth regulating properties or ethylene responses or ethylene-type responses, depending upon the concentration used, the formulation employed and the type of plant species treated. While the compositions may be regarded as achieving an ethylene response or an ethylene-type response, the present invention is not necessarily limited thereto since it is recognized that certain growth regulating responses achieved through the practice of the present invention may not be regarded as being technically traditional or known or to be discovered ethylene responses or even ethylene-type responses. Hence, it is preferred to regard the results achieved in the practice of the present invention as growth regulating responses.

In view of the foregoing, it can be seen that the term "method for regulating plant growth" or the term "growth regulation process" or the use of the words "growth regulation" or "plant growth regulator" or other terms using the word "regulate" as used in the specification and in the claims mean a variety of plant responses which attempt to improve some characteristic of the plant as distinguished from herbicidal action, the intention of which is to destroy a plant. For this reason, the synergistic plant growth regulator compositions of this invention are used in amounts which are non-phytotoxic with respect to the plant being treated.

Nevertheless, the synergistic plant growth regulator compositions of this invention can sometimes be used in a herbicidal context, for instance, to stimulate the growth of dormant rhizomes in order to make such rhizomes more susceptible to a herbicide. However, even here the compositions are not themselves in any practical sense herbicides since they promote the growth of the unwanted plant or otherwise make it very susceptible to a true herbicide. Thus, the present invention can be carried out in conjunction with or in the presence of other compounds or mixtures which are herbicides.

By virtue of the practice of the present invention, a wide variety of plant growth responses, generally ethylene responses or ethylene-type responses can be achieved, including the following:

1. Increasing yields;
2. Auxin activity;
3. Inhibition of terminal growth, control of apical dominance, increase in branching and increase in tillering;
4. Changing biochemical compositions of plant;
5. Abscission of foliage, flowers and fruit or stimulation of separation of abscission zone;
6. Hastening ripening and color promotion in fruit and leaves;
7. Increasing flowering and fruiting and causing flower induction;
8. Abortion or inhibition of flowering and seed development;
9. Prevention of lodging;
10. Stimulation of seed germination and breaking of dormancy;
11 . Resistance to freeze injury;
12. Hormone or epinasty effects;
13. Interactions with other growth regulators;
14. Interactions with herbicides; and
15. Disease resistance.

It is intended that as used in the appended claims the term "method for regulating plant growth" or "method for inducing an ethylene response" or "method of inducing an ethylene-type response" means the achievement of any of the aforementioned fifteen categories of response as well as any other modification of plant, seed, fruit, vegetable (whether the fruit or vegetable is unharvested or have been harvested) so long as the net result is to increase growth or benefit any property of the plant, seed, fruit or vegetable as distinguished from herbicidal action (unless the present invention is practiced in conjunction with or in the presence of a herbicide). The term "fruit" as used herein and in the appended claims is to be understood as meaning anything of economic value that is produced by the plant.

Certain preliminary details connected with the foregoing fifteen categories should make for a better appreciation of the invention.

1. Increasing Yields:

The synergistic plant growth regulator compositions are capable of increasing yields of many plants, including, but not limited to small grains, particularly oats (Avena sativa), wheat (Triticum aestivum), and barley (Hordeum spp.); and of increasing yields of other types of plants, such as beans and of cotton (Gossypium hirsutum);

2. Auxin Activity:

When applied, for instance, as a lanolin paste, to one side of a decapitated sunflower hypocotyl, the synergistic plant growth regulator compositions are capable of inducing bending of the hypocotyl away from the side of the application; they are also capable of inducing sprouting of underground rhizomes of monocotyledonous and dlcotyledonous plants; of causing cell proliferation; and of inducing rooting, as illustrated by the production of large numbers of root primordia over the entire stem length of tomato plants (Lycopersicon esculentum) after these have been sprayed with an aqueous solution thereof --this type of response makes it possible to root cuttings either when taken from treated plants or after treatment of their cut ends.

3. Inhibition of Terminal Growth, Control of Apical Dominance, Increase in Branching, and Increase in Tillering:

These types of plant growth response can be produced on a variety of plant species when they are treated with the synergistic plant growth regulator compositions including privet (Ligustrum ovalifolium), blueberry (Vaccinum corymbosum), azalea (Rhododendron obtusum), soybeans (Glycine max.), snapbeans (Phaseolus vulgaris), tomatoes (Lycopersicon esculentum), alligator weed (Alternanthua philoxeroides) and monoctyledons such as rice (Oryza sativa), johnsongrass (Sorghum halepense) and wild oats (Avena fatua). This type of response can also be of value in the control of roadside grasses. It has been suggested that the removal of the lead bud (e.g., by pinching) should allow growth of axillary buds; but it is generally found that on removal of the lead bud, one of the axillary buds takes over the activity and dominance of the lead bud. The use of the synergistic plant growth regulator compositions, however, usually retards the activity of the lead bud for a while but then later restores the lead bud to normal growth, with production of normal flowers and normal fruit; and thus one avoids the permanent loss of buds inevitably associated with pinching. However, some plant species may respond differently when treated with the synergistic plant growth regulator compositions for control of apical dominance --growth inhibition may extend to include not only the lead bud but also lateral buds along the stem. Examples of such plants are tobacco (Nicotiana tabacum) and chrysanthemum (Chrysanthemum sp.) --this type of response is useful for preventing sucker growth from lateral buds on tobacco.

4. Changing Biochemical Composition of Plant:

The synergistic plant growth regulator compositions are capable of measurably increasing the leaf area relative to the stem area in many plants, and the increased ratio of leaves to stem results in an increase in total protein on a per plant basis, and modification of the protein, carbohydrate, fat, nicotine and sugar within the treated plant. The synergistic plant growth regulator compositions are also capable of increasing latex flow in rubber trees to give a yield increase in dry rubber content.

5. Abscission of Foliage, Flowers and Fruit or Stimulation of Separation of Abscission Zone:

The synergistic plant growth regulator compositions may accelerate abscission of mature foliage on both perennial and annual plant species. They can be, for instance, quite active as defoliants on cotton and inhibit regrowth, and defoliation properties may also be observed in other plant species, such as roses, apples, citrus, and nursery stock, once the leaves have attained a mature state. Abscission of Flowers and/or fruit following application of the synergistic plant growth regulator compositions may be observed on a variety of plant species, including apples (Malus domestica), pears (Pyrus communis), cherries (Prunus avium), pecans (Carva illinoensis), grapes (Vitis vinifera), olives (Olea europaea), coffee (Coffea arabica), and snapbeans (Phaseolus vulgaris) --these abscission responses can be used to regulate flower production and as an aid in harvesting fruit. Stimulation of separation of abscission zone may be observed, for example, in boll opening of cotton or in shuck split of nuts such as walnuts, pecans and the like.

6. Hastening Ripening and Color Promotion in Fruit and Leaves:

The synergistic plant growth regulator compositions are capable of hastening the ripening of fruit (picked or unpicked) from a number of plant species, such as apples (Malus domestica), pears (Pyrus communis), cherries (Prunus avium), tomatoes (Lycopersicon esculentum), bananas and pineapples (Ananas comosus); and of removing the green color from harvestable leaves such as tobacco (Nicotiana tabacum)

and regreened citrus such as oranges (Citrus sinensis) and lemons (Citrus limon).

7. Increasing Flowering and Fruiting and Causing Flower Induction:

Suitably applied, the syneristic plant growth regulator compositions are be capable of increasing flowering and fruiting and causing flower induction in a number of economic crops, such as soybeans (Glycine max.), snapbeans (Phaseolus vulgaris), kidney beans (Phaseolus vulgaris), zinnias (Zinnia elegans), pineapples and mangos.

8. Abortion or Inhibition of Flowering and Seed Development:

Suitably applied, the synergistic plant growth regulator compositions may inhibit flowering and/or abort seed development, for example, in johnsongrass (Sorghum halepense).

9. Prevention of Lodging:

Application of the synergistic plant growth regulator compositions may induce rigor resulting in firmer and stronger plants capable of resisting natural tendencies towards lodging. This effect may be observed on a number of plant species, such as, for example, wheat (Triticum aestivum), barley (Hordeum vulgare), and pea (Pisum sativum).

10. Stimulation of Seed Germination and Breaking of Dormancy:

The synergistic plant growth regulator compositions may stimulate the germination of, for instance, lettuce seed and to terminate the dormancy of tubers, such as seed potatoes.

11. Resistance to Freeze Injury:

The synergistic plant growth regulator compositions may increase the hardiness of various plant species, such as, for example, lima beans (Phaseolus limensis).

12. Hormone or Epinasty Effects:

The synergistic plant growth regulator compositions may produce hormone or epinasty effects upon various plants, including, notably tomatoes (Lycopersicon esculentum).

13. Interactions with other Growth Regulators:

The synergistic plant growth regulator compositions may, of course, be used in conjunction with other plant growth regulators, such as maleic hydrazide, N-dimethylaminosuccinamic acid, gibberellic acid and naphthaleneacetic acid, and interact therewith producing synergistic or antagonistic responses in various plants.

14. Interactions with Herbicides:

While the synergistic plant growth regulator compositions have essentially no phytotoxic activity of their own, they may be used in their capacity as plant growth regulators in conjunction with herbicides, for instance, with aminotriazole in the herbicidal control of Johnson grass (Sorghum halepense).

15. Disease Resistance:

Disease resistance makes tissue resistant to invasion by plant pathogens by influencing the enzyme and plant processes which regulate growth and natural disease immunity.

The proportional amount of the ethylene response or ethylene-type response inducing agent, i.e., agent (i), and the cyclopropylmalonanilate derivative compound, i.e., compound (ii), in the synergistic plant growth regulator compositions of this invention is such that the amount of compound (ii) used with agent (i) results in a mixture having a greater plant growth regulating effect than the sum total plant growth regulating effect of agent (i) and compound (ii) used alone. The amount of agent (i) and compound (ii) can vary over a wide

range depending on the particular agent and compound employed, the particular crop to be treated, the particular plant growth regulating effect desired, environmental and climatic conditions, and the like. The weight proportion of agent (i) to compound (ii) can be, for example, from about 0.1:1000 to about 1000:0.1 respectively. Preferably, the weight proportion of agent (i) to compound (ii) can be from about 1:500 to about 500:1. The amount of synergistic plant growth regulator composition should preferably be non-phytotoxic with respect to the plant being treated.

The synergistic plant growth regulator compositions of this invention can be prepared by conventional mixing methods and may be employed according to a variety of conventional methods known to those skilled in the art. Either combination (mix) or sequential application methods can be used according to this invention. However, in sequential application methods, compound (ii) is generally appied prior to agent (i) to achieve a synergistic plant growth regulating response. Compositions containing agent (i) and compound (ii) as the active ingredient will usually comprise a carrier and/or diluent, either liquid or solid. As used herein, the active ingredient refers to the combination of agent (i) and compound (ii).

Suitable liquid diluents or carriers include water, petroleum distillates, or other liquid carriers with or without surface active agents. Liquid concentrates can be prepared by dissolving one of these compounds with a nonphytotoxic solvent such as acetone, xylene, nitrobenzene, cyclohexanone or dimethyl formamide and dispersing the active ingredients in water with the aid of suitable surface active emulsifying and dispersing agents.

The choice of dispersing and emulsifying agents and the amount employed are dictated by the nature of the composition and the ability of the agent to facilitate the dispersion of the active ingredient. Generally, it is desirable to use as little of the agent as is possible, consistent with the desired dispersion of the active ingredient in the spray so that rain does not re-emulsify the active ingredient after it is applied to the plant and wash it off the plant. Nonionic, anionic, or cationic dispersing and emulsifying agents may be employed, for example, the condensation products of alkylene oxides with phenol and organic acids, alkyl aryl sulfonates, complex ether alcohols, quaternary ammonium compounds, and the like.

In the preparation of wettable powder or dust compositions, the active ingredient is dispersed in and on an appropriately divided solid carrier such as clay, talc, bentonite, diatomaceous earth, fuller's earth, and the like. In the formulation of the wettable powders, the aforementioned dispersing agents as well as lignosulfonates can be included.

The required amount of the active ingredient contemplated herein can be applied per acre treated in from 1 to 200 gallons (which corresponds to from 9,35 to 1870 l/ha) or more of liquid carrier and/or diluent or in from about 5 to 500 pounds (which corresponds to from 5,61 to 561 kg/ha of inert solid carrier and/or diluent. The concentration in the liquid concentrate will usually vary from about 5 to 95 percent by weight and in the solid formulations from about 0.5 to about 90 percent by weight. Satisfactory sprays or dusts for general use contain from about 0.001 to about 100 pounds of active ingredient per acre, (i.e. 0.001 to 112 kg/ha) preferably from about 0.01 to about 15 pounds of active ingredient per acre, (i.e. 0,01 to 17 kg/ha) and more preferably from about 0.1 to about 5 pounds of active ingredient per acre.(i.e. 0,1 to 6 kg/ha)

Formulations useful in the conduct of this invention can also contain other optional ingredients such as stabilizers or other biologically active compounds, insofar as they do not impair or reduce the activity of the active ingredient and do not harm the plant being treated. Other biologically active compounds include, for example, one or more insecticidal, herbicidal, fungicidal, nematicidal, miticidal, plant growth regulators or other known compounds. Such combinations may be used for the known or other purpose of each ingredient and may provide a synergistic effect.

Although the preferred method of application of the synergistic plant growth regulator compositions is directed to the foliage and stems of plants, such compositions may be applied to the soil in which the plants are growing, and that such compositions may be root-absorbed to a sufficient extent so as to result in plant growth regulator responses in accordance with the teachings of this invention.

The synergistic plant growth regulator compositions of this invention are preferably applied to growing plants as set forth in many of the examples in this specification. However, under certain circumstances, the compositions used may be active in seed treatment, for instance, lettuce seeds and oat seeds, or root dipping.

The synergistic plant growth regulator compositions are preferably applied to plants and crops under average or normal growing conditions. The synergistic plant growth regulator compositions of this invention can be applied during the plant vegetation growth phase or the plant reproductive growth phase to obtain the desired plant growth regulating effects.

As used herein, plants refer in general to any agronomic or horticultural crops, ornamentals and turfgrasses. Illustrative of plants which can be treated by the synergistic plant growth regulator compositions of this invention include, for example, corn, cotton, sweet potatoes, white potatoes, alfalfa, wheat, rye, rice,

barley, oats, sorghum, dry beans, soybeans, sugar beets, sunflowers, tobacco, tomatoes, canola, deciduous fruit, citrus fruit, tea, coffee, olives, pineapple, cocoa, banana, sugar cane, oil palm, herbaceous bedding plants, woody shrubs, turfgrasses, ornamental plants, evergreens, trees, flowers, and the like. As used herein, crops refer in general to any of the illustrative agronomic or horticultural crops above.

The synergistic plant growth regulator compositions contemplated herein are effective for inducing a variety of plant growth regulating responses. Such compositions have a high margin of safety in that when used in sufficient amount to provide a plant growth regulating effect, they do not burn or injure the plant, and they resist weathering which includes wash-off caused by rain, decomposition by ultraviolet light, oxidation, or hydrolysis in the presence of moisture or, at least, such decomposition, oxidation, and hydrolysis as would materially decrease the desirable plant growth regulating characteristic of the active ingredient or impart undesirable characteristics, for instance, phytotoxicity, to the active ingredients. Mixtures of the active composition can be employed if desired as well as combinations of the active composition with other biologically active compounds or ingredients as indicated above.

The following examples are illustrative of the present invention.

## Example I

### Preparation of ethyl 1-(2-methyl-4,5-dichlorophenylaminocarbonyl)cyclopropanecarboxylate

Into a nitrogen-purged round bottom flask was charged 5.53 grams (0.03 mole) of 2-methyl-4,5-dichloroaniline, 3.18 grams (0.03 mole) of triethylamine and 190 milliliters of tetrahydrofuran solvent. With vigorous stirring, a 5.55 gram (0.03 mole) portion of ethyl 1-chlorocarbonylcyclopropanecarboxylate prepared in Example XVIII was added in one portion, after which the mixture was stirred at ambient temperature for a six-hour period. A precipitate of triethylamine hydrochloride was then filtered off and the filtrate vacuum stripped to give a light yellow solid. The solid was taken up in ether and the solution water-washed, dried over magnesium sulfate, and solvent evaporated to give a yellow powder. Recrystallization from ethyl acetate-hexane gave 4.51 grams (0.01 mole) of ethyl 1-(2-methyl-4,5-dichlorophenylaminocarbonyl)cyclopropanecarboxylate Compound 77 having a melting point of 105°C-107°C.

## Example II

In a manner similar to that employed in Example I , other compounds were prepared. The structures and analytical data for Compounds 78 through 96 are set forth in Table A below.

TABLE A

Representative Malonic Acid Derivative Compounds

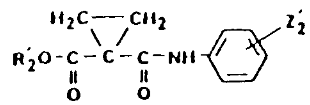

| Compound No. | Substituents $R'_2$ | Substituents $Z'_2$ | Elemental Analysis Calculated C | Calculated H | Calculated N | Found C | Found H | Found N | Melting Point °C |
|---|---|---|---|---|---|---|---|---|---|
| 78 | $C_2H_5$ | 2,4,5-$Cl_3$ | 46.38 | 3.59 | 4.16 | 46.69 | 3.99 | 4.10 | 130-132.5 |
| 79 | $C_2H_5$ | 3,4-$Cl_2$ | 51.67 | 4.34 | 4.64 | 51.95 | 4.34 | 4.72 | 107-110 |
| 80 | $C_2H_5$ | 2,4-$Cl_2$ | 51.67 | 4.34 | 4.64 | 51.27 | 4.53 | 4.46 | 95-98 |
| 81 | $C_2H_5$ | 2,5-$Cl_2$ | 51.67 | 4.34 | 4.64 | 51.36 | 4.48 | 4.49 | 105-108 |
| 82 | $C_2H_5$ | 2-F-4-Cl | 54.65 | 4.59 | 4.90 | 54.92 | 4.71 | 4.85 | 94.5-96 |
| 83 | $C_2H_5$ | 4-Cl | 58.32 | 5.27 | 5.23 | 58.15 | 5.29 | 5.16 | 91-93 |
| 84 | $C_2H_5$ | 4-Br | 50.02 | 4.52 | 4.49 | 50.18 | 4.69 | 4.52 | 92.5-95 |
| 85 | $C_2H_5$ | 3,4-$Br_2$ | 39.92 | 3.35 | 3.58 | 40.18 | 3.47 | 3.60 | 128-130 |
| 86 | $C_2H_5$ | 3,5-$Br_2$ | 39.92 | 3.35 | 3.58 | 39.82 | 3.32 | 3.46 | 91-92.5 |
| 87 | $C_2H_5$ | 2,4-$Br_2$ | 39.92 | 3.35 | 3.58 | 40.02 | 3.61 | 3.77 | 102-103.5 |
| 88 | $C_2H_5$ | 2-Cl-4-Br | 45.04 | 3.78 | 4.04 | 45.28 | 3.98 | 3.90 | 109-110.5 |
| 89 | $C_2H_5$ | 2-Br-4-Cl | 45.04 | 3.78 | 4.04 | 44.89 | 4.29 | 3.80 | 95-96 |
| 90 | $C_2H_5$ | 3-Cl-4-Br | 45.04 | 3.78 | 4.04 | 45.16 | 4.20 | 3.79 | 113-116 |
| 91 | $C_2H_5$ | 2-$CH_3$-4-Br-5-Cl | 46.62 | 4.19 | 3.88 | 48.14 | 4.74 | 3.86 | 119-121 |

TABLE A (Cont.)

Representative Malonic Acid Derivative Compounds

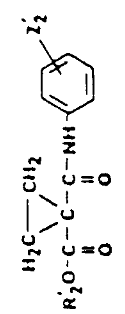

| Compound No. | Substituents $R'_2$ | Substituents $Z'_2$ | Elemental Analysis Calculated C | Calculated H | Calculated N | Found C | Found H | Found N | Melting Point °C |
|---|---|---|---|---|---|---|---|---|---|
| 92 | $C_2H_5$ | 2-F-4-Br | 47.29 | 3.97 | 4.24 | 46.87 | 4.07 | 4.02 | 102-103 |
| 93 | $C_2H_5$ | H | 66.83 | 6.47 | 6.00 | 66.54 | 6.48 | 5.80 | 85-89 |
| 94 | $C_2H_5$ | 3,5-$Cl_2$ | 51.67 | 4.34 | 4.64 | 51.52 | 4.52 | 4.36 | 64-67 |
| 95 | $C_2H_5$ | 4-C≡N | 65.10 | 5.46 | 10.85 | 65.02 | 5.51 | 10.67 | 129-132 |
| 96 | $C_2H_5$ | 2-$CH_3$-4-Br | 51.55 | 4.94 | 4.29 | 51.72 | 4.74 | 4.31 | 89-91 |

## Example III

Preparation of 1-(2-methyl-4,5-dichlorophenylaminocarbonyl)cyclopropanecarboxylic acid

A solution containing 0.34 gram (0.006 mole) of potassium hydroxide and 0.109 gram (0.006 mole) of

water in 80 milliliters of ethanol was prepared in a 250 milliliter round bottom flask. With cooling to a temperature of 0°C in an ice/NaCl bath and stirring, a solution of ethyl 1-(2-methyl-4,5-dichlorophenylaminocarbonyl)cyclopropanecarboxylate prepared in Example I in a small volume of ethanol was added and the mixture allowed to stir with warming to room temperature over a 72 hour period. The mixture was vacuum evaporated to give a white solid residue which was dissolved in water and extracted twice with ether. The ether extracts were discarded. The water solution was acidified to a pH of 2 with 25% HCl solution causing separation of a solid which was taken up into ether, and the acidified aqueous phase was extracted four times. The combined ether extracts were dried over magnesium sulfate and vacuum evaporated to give a white solid. This white solid was water-washed and dried in a vacuum oven to give 1.85 grams (0.006 mole) of 1-(2-methyl-4,5-dichlorophenylaminocarbonyl)cyclopropanecarboxylic acid, Compound 110, having a melting point of 248°C-251°C. This compound is referred to hereinafter as Compound 110.

Example IV

In a manner similar to that employed in Example III, other compounds were prepared. The structures and analytical data for Compounds III through 128 are set forth in Table B below.

## TABLE B

Representative Malonic Acid Derivative Compounds

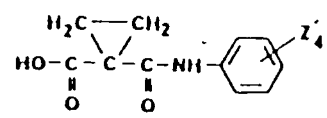

| Compd. No. | Substituent Z'4 | Elemental Analysis: Calculated C | Calculated H | Calculated N | Found C | Found H | Found N | Melting Point °C |
|---|---|---|---|---|---|---|---|---|
| 111 | 2-$CH_3$-4-Br | 48.34 | 4.06 | 4.70 | 48.20 | 4.06 | 4.66 | 204.5-206 |
| 112 | 2,4,5-$Cl_3$ | 42.82 | 2.61 | 4.54 | 43.11 | 3.14 | 4.42 | 250 |
| 113 | 2,5-$Cl_2$ | 48.20 | 3.31 | 5.11 | 48.33 | 3.26 | 4.96 | 223.5-226 |
| 114 | 2,4-$Cl_2$ | 48.20 | 3.31 | 5.11 | 45.26 | 3.40 | 5.03 | 189-190 |
| 115 | 2-F-4-Cl | 51.27 | 3.52 | 5.44 | 51.18 | 3.70 | 5.22 | 202-204 |
| 116 | 4-Cl | 55.12 | 4.21 | 5.84 | 54.69 | 4.35 | 5.59 | 217-219 |
| 117 | 4-Br | 46.50 | 3.55 | 4.93 | 46.36 | 3.45 | 4.86 | 220-222 |
| 118 | 3,4-$Br_2$ | 36.39 | 2.50 | 3.86 | 37.13 | 2.70 | 3.83 | 224-226.5 |
| 119 | 3,5-$Br_2$ | 36.39 | 2.50 | 3.86 | 36.99 | 2.60 | 3.82 | 211-212 |
| 120 | 2,4-$Br_2$ | 36.39 | 2.50 | 3.86 | 36.61 | 2.95 | 4.04 | 222-225 |
| 121 | 2-Cl-4-Br | 41.47 | 2.85 | 4.40 | 39.74 | 3.90 | 3.95 | 166-168(dec.) |
| 122 | 2-Br-4-Cl | 41.47 | 2.85 | 4.40 | 41.67 | 3.28 | 3.91 | 210-211 |
| 123 | 3-Cl-4-Br | 41.47 | 2.85 | 4.40 | 41.70 | 3.23 | 4.11 | 211-214 |
| 124 | 2-$CH_3$-4-Br-5-Cl | 43.33 | 3.33 | 4.21 | 45.47 | 4.08 | 3.91 | 231-234 |
| 125 | 2-F-4-Br | 43.73 | 3.00 | 4.64 | 43.97 | 3.05 | 4.30 | 203.5-207 |
| 126 | 4-$CF_3$ | 52.75 | 3.69 | 5.13 | 52.73 | 3.90 | 5.04 | 195-196.5 |
| 127 | 3,5-$Cl_2$ | NMR ($CDCl_3$): 1.52 (s,4H), 7.02-7.74 (m,4H), 10.08 (s, H) ppm. | | | | | | 198-202 |
| 128 | 3,4-$Cl_2$ | 48.20 | 3.31 | 5.11 | 48.79 | 3.80 | 5.26 | 220-222.5 |

Example VI

Effect of Representative Synergistic Compositions on Defoliation of Snapbean Plants

Solutions of the test compounds and compositions identified in Table C below were prepared by dissolving the compounds in acetone/water (50:50 volume/volume) containing 0.1 percent volume/volume of Triton X-100 surfactant commercially available from Rhom and Haas Company, Philadelphia, Pennsylvania.

As detailed below, these solutions of the test compounds and compositions were applied to snapbean plants at a concentration of 0.25 pounds of each active ingredient per acre (0.28 kg/ha) or 0.50 pounds of each active ingredient per acre (0.56 kg/ha). The compositions were applied to the snapbean plants as a mixture. Ethephon is commercially available from Union Carbide Agricultural Products Company, Inc., Research Triangle Park, North Carolina.

Into 13.5 centimeter diameter plastic pots containing a potting soil mix, i.e., one-third sandy loam soil, one-third peat moss and one-third perlite by volume, were sown three snapbean seeds (Phaseolus vulgaris var. Cranberry). Five to seven days after planting, the plants were thinned to one plant per pot. Ten to fourteen days after planting at the time of full expansion of the primary leaves, each concentration of the test compounds and compositions identified in Table J (each pot sprayed with a volume equivalent to 180 gallons per acre) - i.e. 1683 l/ha was applied to three snapbean plants as a foliar spray by use of an aspirated spray apparatus set at 10 psig air pressure (517 mmHg). As a control, a water-acetone solution containing no test compound or composition was also sprayed on three snapbean plants. When dry, all or the plants were placed in a greenhouse at a temperature of 80°F ± 5°F (27°C ± 3°C) and humidity of 50 percent ± 5 percent. At 96 hours after treatment, percent defoliation of the snapbean plants was determined by visual observation. The values obtained For the control and each test compound and composition were averaged to obtain the results in Table C.

TABLE C

Effect of Representative Synergistic Compositions on Defoliation of Snapbean Plants

| Compound/ Composition Identification | Rate (Pounds per Acre) | Percent Defoliation |
|---|---|---|
| Control | - | 0 |
| Ethephon | 0.25 | 0 |
| | 0.50 | 21 |
| Compound 111 | 0.25 | 0 |
| | 0.50 | 0 |
| Ethephon + Compound 111 | 0.25 + 0.25 | 93 |
| | 0.50 + 0.50 | 97 |
| Compound 96 | 0.25 | 0 |
| | 0.50 | 0 |

TABLE C (Cont.)

Effect of Representative Synergistic Compositions on Defoliation of Snapbean Plants

| Compound/ Composition Identification | Rate (Pounds per Acre) | Percent Defoliation |
|---|---|---|
| Ethephon + Compound | 0.25 + 0.25 | 17 |
| 96 | 0.50 + 0.50 | 37 |
| Compound 126 | 0.25 | 0 |
| | 0.50 | 0 |
| Ethephon + Compound | 0.25 + 0.25 | 82 |
| 126 | 0.50 + 0.50 | 100 |
| Compound 128 | 0.25 | 0 |
| | 0.50 | 0 |
| Ethephon + Compound | 0.25 + 0.25 | 47 |
| 128 | 0.50 + 0.50 | 50 |
| Compound 112 | 0.25 | 0 |
| | 0.50 | 0 |
| Ethephon + Compound | 0.25 + 0.25 | 77 |
| 112 | 0.50 + 0.50 | 40 |
| Compound 80 | 0.25 | 0 |
| | 0.50 | 0 |
| Ethephon + Compound | 0.25 + 0.25 | 47 |
| 80 | 0.50 + 0.50 | 27 |
| Compound 113 | 0.25 | 0 |
| | 0.50 | 0 |
| Ethephon + Compound | 0.25 + 0.25 | - |
| 113 | 0.50 + 0.50 | 23 |
| Compound 114 | 0.25 | 0 |
| | 0.50 | 0 |

TABLE C (Cont.)

Effect of Representative Synergistic Compositions on Defoliation of Snapbean Plants

| Compound/ Composition Identification | Rate (Pounds per Acre) | Percent Defoliation |
|---|---|---|
| Ethephon + Compound 114 | 0.25 + 0.25 | - |
| | 0.50 + 0.50 | 97 |
| Compound 82 | 0.25 | 0 |
| | 0.50 | 0 |
| Ethephon + Compound 82 | 0.25 + 0.25 | - |
| | 0.50 + 0.50 | 60 |
| Compound 115 | 0.25 | 0 |
| | 0.50 | 0 |
| Ethephon + Compound 115 | 0.25 + 0.25 | - |
| | 0.50 + 0.50 | 93 |
| Compound 116 | 0.25 | 0 |
| | 0.50 | 0 |
| Ethephon + Compound 116 | 0.25 + 0.25 | - |
| | 0.50 + 0.50 | 87 |
| Compound 117 | 0.25 | 0 |
| | 0.50 | 0 |
| Ethephon + Compound 117 | 0.25 + 0.25 | - |
| | 0.50 + 0.50 | 97 |

TABLE C (Cont.)

Effect of Representative Synergistic Compositions on Defoliation of Snapbean Plants

| Compound/ Composition Identification | Rate (Pounds per Acre) | Percent Defoliation |
|---|---|---|
| Compound 88 | 0.25 | 0 |
| | 0.50 | 0 |
| Ethephon + Compound 88 | 0.25 + 0.25 | - |
| | 0.50 + 0.50 | 40 |
| Compound 90 | 0.25 | 0 |
| | 0.50 | 0 |
| Ethephon + Compound 90 | 0.25 + 0.25 | - |
| | 0.50 + 0.50 | 30 |
| Compound 120 | 0.25 | 0 |
| | 0.50 | 0 |

TABLE C (Cont.)

Effect of Representative Synergistic Compositions on Defoliation of Snapbean Plants

| Compound/ Composition Identification | Rate (Pounds per Acre) | Percent Defoliation |
|---|---|---|
| Ethephon + Compound | 0.25 + 0.25 | - |
| 120 | 0.50 + 0.50 | 30 |
| Compound 121 | 0.25 | 0 |
| | 0.50 | 0 |
| Ethephon + Compound | 0.25 + 0.25 | - |
| 121 | 0.50 + 0.50 | 60 |
| Compound 122 | 0.25 | 0 |
| | 0.50 | 0 |
| Ethephon + Compound | 0.25 + 0.25 | - |
| 122 | 0.50 + 0.50 | 37 |
| Compound 123 | 0.25 | 0 |
| | 0.50 | 0 |
| Ethephon + Compound | 0.25 + 0.25 | - |
| 123 | 0.50 + 0.50 | 86 |
| Compound 96 | 0.25 | 0 |
| | 0.50 | 0 |
| Ethephon + Compound | 0.25 + 0.25 | 74 |
| 96 | 0.50 + 0.50 | 83 |

The results in Table C demonstrate that compositions containing ethephon and a cyclopropylmalonanilate derivative compound provide a synergistic effect on defoliation of snapbean plants.

## Example VII

### Effect of Representative Synergistic Compositions on Defoliation of Snapbean Plants

In a manner similar to the procedure described in Example VI, the defoliation effect on snapbean plants was determined for representative synergistic compositions at various rates of application except that percent defoliation of the snapbean plants was determined at 72 hours after treatment. The results of these tests are set forth in Table D below.

TABLE D

| Effect of Representative Synergistic Compositions on Defoliation of Snapbean Plants | | |
|---|---|---|
| Compound/Composition Identification | Rate (Pounds per Acre) | Percent Defoliation |
| Control | - | 0 |
| Ethephon | 0.25 | 0 |
| Compound 96 | 0.25 | 0 |
| Ethephon + Compound 96 | 0.25 + 0.25 | 80 |
| Ethephon | 0.50 | 0 |
| Compound 96 | 0.50 | 0 |
| Ethephon + Compound 96 | 0.50 + 0.50 | 90 |
| Ethephon | 0.25 | 0 |
| Compound 96 | 0.50 | 0 |
| Ethephon + Compound 96 | 0.25 + 0.50 | 83 |
| Ethephon | 0.50 | 0 |
| Compound 96 | 0.25 | 0 |
| Ethephon + Compound 96 | 0.50 + 0.25 | 90 |

The results in Table D demonstrate that compositions containing ethephon and a cyclopropylmalonanilate derivative compound provide a synergistic effect on defoliation of snapbean plants.

Example VIII

Effect of Combination/Sequential Applications of Representative Synergistic Compositions on Defoliation of Snapbean Plants

In a manner similar to the procedure described in Example VI , the defoliation effect on snapbean plants was determined for representative synergistic compositions using both combination (tank mix) and sequential application methods. In the sequential application method, the second compound was applied 78 hours after the first compound. The results of these tests are set forth in Table E below.

TABLE E

| Effect of Combination/Sequential Applications of Representative Synergistic Compositions on Defoliation of Snapbean Plants | | |
|---|---|---|
| Compound/Composition Identification | Rate (Pounds per Acre) | Percent Defoliation |
| Control | - | 0 |
| Ethephon | 0.5 | 0 |
| Compound 96 | 0.5 | 0 |
| *Ethephon + Compound 96 | 0.5 + 0.5 | 87 |
| **Ethephon + Compound 96 | 0.5 + 0.5 | 10 |
| **Compound 96 + Ethephon | 0.5 + 0.5 | 86 |

*Combination application method (tank mix).
**Sequential application method.

The results in Table E demonstrate a synergistic defoliation effect for the combination application method (tank mix) of ethephon and a malonic acid derivative compound. In regard to the sequential application method, a synergistic defoliation effect is demonstrated by applying the cyclopropylmalonanilate derivative compound prior to ethephon.

Example IX

Effect of Representative Synergistic Compositions on Defoliation and Boll Opening of Cotton

Solutions of the test compounds and compositions identified in Table F were prepared by dissolving the compounds in acetone/water (50:50 volume/volume) containing 0.1 percent volume/volume of Surfel® spray adjuvant commercially available from Union Carbide Corporation, Danbury, Connecticut. As detailed below, these solutions of test compounds and compositions were applied to cotton plants at a concentration of 0.5 pounds of each active ingredient per acre (0,6 kg/ha) or 2.0 pounds of active ingredient per acre (2,2 kg/ha). The compositions were applied to cotton as mixtures.

The above solutions were applied to cotton plants growing under field conditions at a spray volume equivalent to 100 gallons per acre 935 l/ha) by use of a carbon dioxide backpack sprayer set at about 30 psig air pressure (2 bar). The application timing coincided with a cotton maturity phase equivalent to about 40 percent open bolls. As a control, a water-acetone solution containing no test compound or composition was also sprayed on the cotton plants. At four days after treatment, percent defoliation of the cotton plants was determined by visual observation. At 14 days after treatment, percent boll opening was determined by visual observation of the number of open bolls/total number of bolls. The percent defoliation and percent boll opening values obtained for the control and each of the test compounds and compositions are reported in Table F as the average of three replications.

TABLE F

| Effect of Representative Synergistic Compositions on Defoliation and Boll Opening of Cotton | | | |
|---|---|---|---|
| Compound/Composition Identification | Rate (Pounds per Acre) | Percent Defoliation | Percent Boil Opening |
| Control | - | 0 | 41 |
| Ethephon | 2.0 | 5 | 64 |
| Compound 96 | 2.0 | 0 | * |
| Ethephon * Compound 96 | 0.5 + 0.5 | 91 | 70 |
| Compound 111 | 2.0 | 0 | * |
| Ethephon * Compound 111 | 0.5 + 0.5 | 96 | 95 |

*Percent boll opening essentially the same as the control as determined by visual observation.

The results in Table F demonstrate that compositions containing ethephon and a cyclopropylmalonanilate derivative compound provide a synergistic effect on defoliation and boll opening of cotton.

Example X

Effect of Representative Synergistic Compositions on Defoliation of Cotton (Rank Growth)

In a manner similar to the procedure described in Example IX , the defoliation effect on rank growth cotton was determined for representative synergistic compositions at various rates of application. The results of these tests are set forth in Table G below. Rank growth cotton refers to cotton which exhibits excessive vegetative growth.

TABLE G

| Effect of Representative Synergistic Compositions on Defoliation of Cotton (Rank Growth) | | |
|---|---|---|
| Compound/Composition Identification | Rate (Pounds per Acre) | Percent Defoliation |
| Control | - | 0 |
| Ethephon | 2.0 | 12 |
| Compound 96 | 2.0 | 0 |
| Ethephon + Compound 96 | 1.0 + 0.25 | 85 |
| Compound 96 | 2.0 | 0 |
| Ethephon + Compound 96 | 1.0 + 0.50 | 96 |
| Compound 111 | 2.0 | 0 |
| Ethephon + Compound 111 | 1.0 + 0.25 | 97 |
| Compound 111 | 2.0 | 0 |
| Ethephon + Compound 111 | 1.0 + 0.50 | 99 |

The results in Table G demonstrate that compositions containing ethephon and a cyclopropylmalonanilate derivative compound provide a synergistic effect on defoliation of rank growth cotton.

Example XI

Effect of Sequential Applications of Representative Synergistic Compositions on Defoliation of Cotton

In a manner similar to the procedure described in Example VIII , the defoliation effect on cotton was determined for representative synergistic compositions using sequential application. Ethephon applications were made 7 days after application of the particular malonic acid derivative compound. The results of these tests are set forth in Table H below.

TABLE H

| Effect of Sequential Applications of Representative Synergistic Compositions on Defoliation of Cotton | | |
|---|---|---|
| Compound/Com position Identification | Rate (Pounds per Acre) | Percent Defoliation |
| Control | - | 0 |
| Ethephon | 0.25 | 3 |
| Compound 96 | 0.5 | 0 |
| | 1.0 | 0 |
| Compound 111 | 0.5 | 0 |
| | 1.0 | 0 |
| Compound 96 + Ethephon | 0.5 + 0.25 | 93 |
| Compound 96 + Ethephon | 1 .0 + 0.25 | 90 |
| Compound 111 + Ethephon | 0.5 + 0.25 | 87 |
| Compound 111 + Ethephon | 1.0 + 0.25 | 93 |

The results in Table H demonstrate that compositions containing ethephon and a cyclopropylmalonanilate derivative compound provide a synergistic effect on defoliation of cotton by sequential application.

Example XII

Effect of Representative Synergistic Compositions on Defoliation of Cotton

In a manner similar to the procedure described in Example IX , the defoliation effect on cotton was determined for representative synergistic compositions at various rates of application. The results of these tests are set forth in Table I below.

TABLE I

| Effect of Representative Synergistic Compositions on Defoliation of Cotton | | |
|---|---|---|
| Compound/Composition Identification | Rate (Pounds per Acre) | Percent Defoliation |
| Control | - | 0 |
| Ethephon | 0.5 | 13 |
| Compound 96 | 0.5 | 0 |
| Compound 96 + Ethephon | 0.5 + 0.5 | 99 |
| Compound 96 | 0.5 | 0 |
| Compound 96 + Ethephon | 0.5 + 0.25 | 99 |
| Compound 77 | 0.5 | 0 |
| Compound 77 + Ethephon | 0.5 + 0.5 | 97 |
| Compound 110 | 0.5 | 0 |
| Compound 110 + Ethephon | 0.5 + 0.5 | 83 |

The results in Table I demonstrate that compositions containing ethephon and a cyclopropylmalonanilate derivative compound provide a synergistic effect on defoliation of cotton.

Example XIII

Effect of Representative Synergistic Compositions on Defoliation of Cotton

In a manner similar to the procedure described in Example IX , the defoliation effect on cotton was determined for representative synergistic compositions at various rates of application. The results of these tests are set forth in Table Q below.

TABLE J

| Effect of Representative Synergistic Compositions on Defoliation of Cotton | | |
|---|---|---|
| Compound/Composition Identification | Rate (Pounds per Acre) | Percent Defoliation |
| Control | - | 0 |
| Ethephon | 0.5 | 5 |
| Compound 111 | 0.5 | 0 |
| Compound 111 + Ethephon | 0.5 + 0.5 | 99 |
| Compound 111 | 0.5 | 0 |
| Compound 111 + Ethephon | 0.5 + 0.25 | 99 |
| Compound 111 | 0.25 | 0 |
| Compound 111 + Ethephon | 0.25 + 0.5 | 93 |
| Compound 111 | 0.25 | 0 |
| Compound 111 + Ethephon | 0.25 + 0.5 | 96 |

The results in Table J demonstrate that compositions containing ethephon and a cyclopropylmalonanilate derivative compound provide a synergistic effect on defoliation of cotton.

Example XIV

Effect of Representative Synergistic Compositions on Regrowth of Cotton following Defoliation

In a manner similar to the procedure described in Example IX , the effect of cotton regrowth after defoliation was determined for representative synergistic compositions at various rates of application. The percent regrowth inhibition and stimulation in Table R below were determined by visual observation based on the percent of a cotton plant having regrowth using a DEF treated cotton plant as the standard. DEF is commercially available from Mobay Chemical Corporation, Kansas City, Missouri. The average regrowth of a cotton plant treated with DEF was 43 percent. As used in Table R, percent regrowth inhibition resulted

from a cotton plant having a regrowth percentage less than 43 percent (DEF standard), and percent regrowth stimulation resulted from a cotton plant having a regrowth percentage greater than 43 percent. The percent regrowth inhibition and stimulation were determined 30 days after treatment. The results of these tests are set forth in Table K.

TABLE K

Effect of Representative Synergistic Compositions on Regrowth of Cotton following Defoliation

| Compound/ Composition Identification | Rate (Pounds per Acre) | Percent Stimulation | Percent Inhibition |
|---|---|---|---|
| Control (DEF) | - | 0 | 0 |
| Ethephon | 0.5 | 16 | 0 |
| | 1.0 | 70 | 0 |
| | 2.0 | 62 | 0 |
| Compound 96 | 0.5 | 0 | 0 |
| Ethephon + Compound 96 | 0.5 + 0.5 | 0 | 53 |
| Compound 96 | 0.5 | 0 | 0 |
| Ethephon + Compound 96 | 0.5 + 1.0 | 0 | 63 |
| Compound 96 | 0.5 | 0 | 0 |
| Ethephon + Compound 96 | 1.0 + 0.5 | 0 | 46 |
| Compound 96 | 0.5 | 0 | 0 |
| Ethephon + Compound 96 | 1.0 + 1.0 | 0 | 72 |

TABLE K (Cont.)

Effect of Representative Synergistic Compositions on Regrowth of Cotton following Defoliation

| Compound/ Composition Identification | Rate (Pounds per Acre) | Percent Stimulation | Percent Inhibition |
|---|---|---|---|
| Compound 111 | 0.5 | 0 | 0 |
| Ethephon + Compound 111 | 0.5 + 0.5 | 0 | 65 |
| Compound 111 | 0.5 | 0 | 0 |
| Ethephon + Compound 111 | 0.5 + 1.0 | 0 | 53 |
| Compound 111 | 0.5 | 0 | 0 |
| Ethephon + Compound 111 | 1.0 + 0.5 | 0 | 44 |
| Compound 111 | 0.5 | 0 | 0 |
| Ethephon + Compound 111 | 1.0 + 1.0 | 0 | 51 |

The results in Table K demonstrate that compositions containing ethephon and a cyclopropylmalonanilate derivative compound provide a synergistic effect on regrowth inhibition of cotton following defoliation.

Example XV

Effect of Representative Synergistic Compositions on Leaf Ripening of Tobacco

In a manner similar to the procedure described in Example VI except that mature tobacco plants were used in place of snapbean plants, the leaf ripening effect of tobacco was determined for representative synergistic compositions at various rates of application. About 14 days prior to treatment, the mature tobacco plants were topped and treated with 4.0 pounds per acre of MH-30 to retard axillary bud development. MH-30 is commercially available from Uniroyal Chemical Company, Bethany, Connecticut. Percent tobacco leaf ripening (chlorosis) was determined by visual observation of the upper three leaves of the tobacco plant at 7 days after treatment. The results of these tests are set forth in Table L below.

TABLE L

| Effect of Representative Synergistic Compositions on Leaf Ripening of Tobacco | | |
|---|---|---|
| Compound/Com position Identification | Rate (Pounds per Acre) | Percent Ripening (Chlorosis) |
| Control | - | 10 |
| Ethephon | 1.0 | 10 |
| Compound 96 | 1.0 | 10 |
| Compound 96 + Ethephon | 1.0 + .25 | 25 |
| Compound 96 | 1.0 | 10 |
| Compound 96 + Ethephon | 1.0 + 0.5 | 30 |
| Compound 96 | 1.0 | 10 |
| Compound 96 + Ethephon | 1.0 + 1.0 | 60 |

The results in Table L demonstrate that compositions containing ethephon and a cyclopropylmalonanilate derivative compound provide a synergistic effect on leaf ripening of tobacco.

Example XVI

Effect of Representative Synergistic Compositions on Defoliation of Snapbean Plants

In a manner similar to the procedure described in Example VI , the defoliation effect on snapbean plants was determined for representative synergistic compositions at various rates of application using various ethylene releasing agents identified in Table M below. The ethylene releasing agents used in Table L are known materials which can be prepared by conventional methods. The results of these tests are set forth in Table M.

TABLE M

Effect of Representative Synergistic Compositions on Defoliation of Snapbean Plants

| Compound/ Composition Identification | Rate (Pounds per Acre) | Percent Defoliation |
|---|---|---|
| Control | - | 0 |
| Compound 111 | 0.125 | 0 |
| | 0.25 | 0 |
| | 0.50 | 0 |

TABLE M (Cont.)

Effect of Representative Synergistic Compositions on Defoliation of Snapbean Plants

| Compound/ Composition Identification | Rate (Pounds per Acre) | Percent Defoliation |
|---|---|---|
| Ethephon | 0.125 | 0 |
| | 0.25 | 0 |
| | 0.50 | 0 |
| Compound 111 + Ethephon | 0.125 + 0.125 | 53 |
| | 0.125 + 0.25 | 67 |
| | 0.50 + 0.50 | 89 |
| 2-Chloroethyl ester of 2-chloroethylphosphonic acid | 0.125 | 0 |
| | 0.25 | 0 |
| | 0.50 | 0 |
| Compound 111 + 2-Chloroethyl ester of 2-chloroethylphosphonic acid | 0.125 | 40 |
| | 0.125 + 0.25 | 40 |
| | 0.50 + 0.50 | 87 |

TABLE M (Cont.)

Effect of Representative Synergistic Compositions on Defoliation of Snapbean Plants

| Compound/ Composition Identification | Rate (Pounds per Acre) | Percent Defoliation |
|---|---|---|
| 2-Chloroethylphosphonic diamide | 0.125 | 0 |
| | 0.25 | 0 |
| | 0.50 | 0 |
| Compound 111 + 2-Chloroethylphosphonic diamide | 0.125 + 0.125 | 33 · |
| | 0.125 + 0.25 | 27 |
| | 0.50 + 0.50 | 100 |

The results in Table M demonstrate that compositions containing an ethylene releasing agent and a cyclopropylmalonanilate derivative compound provide a synergistic effect on defoliation of snapbean plants.

Example XVII

Effect of Ethylene Gas and a cyclopropylmalonanilate Derivative Compound on Abscission of Snapbean Plant Leaves

Solutions of test compounds identified in Table N below were prepared by dissolving the compounds in acetone/water (60:40 volume/volume) containing 0.1 percent volume/volume of Triton X-100 surfactant commercially available from Rohm and Haas Company, Philadelphia, Pennsylvania.

In a manner similar to the procedure described in Example VI , the solutions of test compounds were applied as a foliar spray to snapbean plants at a concentration of 125 parts per million of active ingredient or 250 parts per million of active ingredient. Prior to treatment, the snapbean plants with an expanded trifoliolate leaf were topped leaving two fully expanded primary leaves. After a period of 24 hours following treatment, the snapbean plants were placed in 10.3 liter desiccators and exposed to ethylene gas at a concentration of 0.1 part per million (ppm). A carbon dioxide trap (2 milliliters of 40 percent potassium hydroxide) was included in each desiccator. The sealed desiccators were then placed in a dark environment. After a period of 48 hours and 96 hours in which the treated snapbean plants were exposed to ethylene gas, percent abscission was determined by visual observation of abscised leaves. The plants were also rated at 96 hours (48 hours after termination of ethylene gas exposure). The percent abscission values are reported in Table N as the average of three replications.

TABLE N

| Effect of Ethylene Gas and a Malonic Acid Derivative Compound on Abscission of Snapbean Plant Leaves | | | |
|---|---|---|---|
| Compound/Composition Identification | Concentration (ppm) | Percent Abscission | |
| | | 48 Hours | 96 Hours |
| Control | - | 0 | 0 |
| Ethylene Gas | 0.1 | 0 | 0 |
| Compound 111 | 125 | 0 | 17 |
| Compound 111 + Ethylene Gas | 125 + 0.1 | 33 | 100 |
| Compound 111 | 250 | 33 | 50 |
| Compound 111 + Ethylene Gas | 250 + 0.1 | 83 | 100 |

The results in Table N demonstrate that a combination of ethylene gas and a cyclopropylmalonanilate derivative compound provide a synergistic effect on abscission of snapbean plant leaves.

**Claims**

1. A plant growth regulator composition comprising (i) an ethylene response or ethylene-type response inducing agent, comprising the 2-chloroethylphosphonic acid, its derivatives and corresponding salts and esters, and (ii) a cyclopropylmalonanilate derivative compound having the formula:

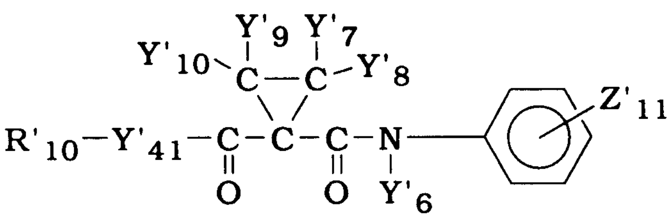

wherein:
$Z'_{11}$ is the same or different and is one or more hydrogen or halogen, or substituted or unsubstituted haloalkyl, polyhaloalkyl, polyhaloalkoxy, alkyl, alkoxy, alkylthio, alkylsulfonyl, alkylsulfinyl, aryl, aryloxy, arylthio, arylsulfonyl, nitro, cyano, dialkoxyphosphinyl, acyl, aroyl, alkoxycarbonyl, alkoxycarbonylalkyl, acylamino, sulfonylamino, alkylsulfonylamino, acyloxy, alkenyl or
-CH=CHCH=CH- ;
$Y'_6$ is hydrogen or alkyl ;
$Y'_7$, $Y'_8$, $Y'_9$ and $Y'_{10}$ are independently hydrogen, halogen or alkyl ;
$Y'_{41}$ is O,S, or NH ;
$R'_{10}$ is hydrogen, ammonium, alkylammonium, polyalkylammonium, hydroxyalkylammonium, poly-(hydroxyalkyl)ammonium, an alkali metal or alkaline earth metal or substituted or unsubstituted alkyl, hydroxyalkyl, alkoxyalkyl, alkoxycarbonylalkyl, alkylaminoalkyl, dialkylaminoalkyl, aryl, mercaptoalkyl, alkylthioalkyl, arylthioalkyl, aryloxyalkyl, alkylsylfonylalkyl, alkylsulfinylalkyl, acylalkyl, aroylalkyl, dialkoxyphosphinylalkyl, diaryloxyphosphinylalkyl, hydroxyalkylthioalkyl, hydroxyalkylsulfonylalkyl, alkoxyalkylthioalkyl, alkoxyalkylsulfonylalkyl, poly(oxyalkylene)alkyl, cyanoalkyl, nitroalkyl, alkylideneamino, carbamoylalkyl, alkylcarbamoylalkyl, dialkylcarbamoylalkyl, aminoalkyl, acylaminoalkyl, acyloxyalkyl, alkoxycarbonylaminoalkyl, cyanoaminoalkyl, carbamoyloxyalkyl, alkylcarbamoyloxyalkyl, dialkylcarbamoyloxyalkyl, alkoxycarbonyloxyalkyl, alkoxycarbonylthioalkyl, aminosulfonylalkyl, alkylaminosulfonylalkyl or dialkylaminosulfonylalkyl ;
in which the amount of compound (ii) used with agent (i) results in a mixture having a greater plant growth regulating effect than the sum total plant growth regulating effect of agent (i) and compound (ii) used alone.

2. A plant growth regulator composition according to claim 1 wherein the 2-chloroethylphosphonic acid derivatives are chosen in the group comprising :
**1**- The bis(acid chloride) of 2-chloroethylphosphonic acid

**2**- The pyrocatechol cyclic ester of 2-chloroethylphosphonic acid
**3**- The 4-chloropyrocatechol cyclic ester of 2-chloroethylphosphonic acid
**4**- The mixed ethyl and 2-hydroxyphenyl diester of 2-chloroethylphosphonic acid
**5**- The mixed butyl and 2-hydroxyphenyl diester of 2-chloroethylphosphonic acid
**6**- The mixed propynyl and 2-hydroxyphenyl diester of 2-chloroethylphosphonic acid
**7**- The 2-chloroethyl monoester of 2-chloroethylphosphonic acid
**8**- The bis(phenyl)ester of 2-chloroethylphosphonic acid
**9**- The tetrachloropyrocatechol cyclic ester of 2-chloroethylphosphonic acid
**10**- The saligen cyclic ester of 2-chloroethylphosphonic acid
**11**- Salicyclic acid cyclic ester of 2-chloroethylphosphonic acid
**12**- The 3-hydroxyphenyl monoester of 2-chloroethylphosphonic acid (which exists in polymeric form)
**13**- The bis(2-oxo-pyrrolidinylmethyl)ester of 2-chloroethylphosphonic acid
**14**- The o-hydroxyphenyl monoester of 2-chloroethylphosphonic acid
**15**- The mixed isopropyl and 2-hydroxyphenyl diester of 2-chloroethylphosphonic acid.
**16**- The mixed octyl and 2-hydroxyphenyl diester of 2-chloroethylphosphonic acid
**17**- The mixed hexadecyl and 2-hydroxyphenyl diester of 2-chloroethylphosphonic acid
**18**- The mixed tridecyl and 2-hydroxyphenyl diester of 2-chloroethylphosphonic acid
**19**- The anhydride of 2-chloroethylphosphonic acid
**20**- 2-chloroethylphosphonic acid
**21**- The mixed butyl and 2-hydroxyphenyl diester of 2-chloroethylphosphonic acid

**3.** The plant growth regulator composition according to anyone of claims 1 or 2, in which the salts of the 2-chloroethylphosphonic acid derivative are chosen in the following group : sodium, aluminium, zinc, potassium, lithium.

**4.** The plant growth regulator composition according to claim 1 comprising 2-chloroethylphosphonic acid (ethephon) and a cyclopropylmalonanilate chosen among the compounds having the formulae:

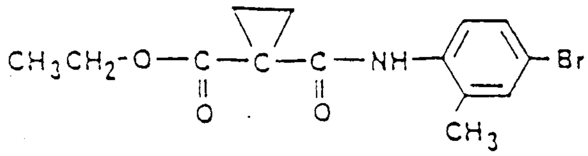

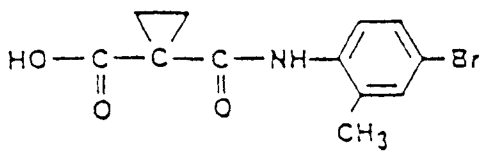

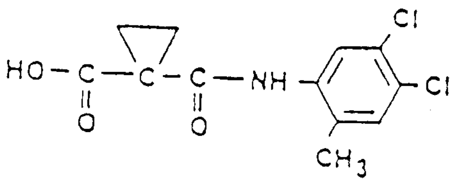

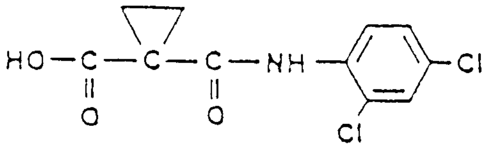

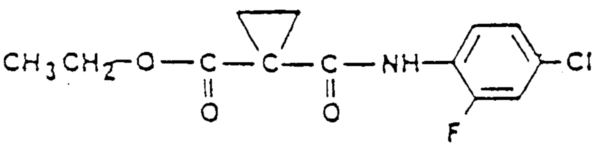

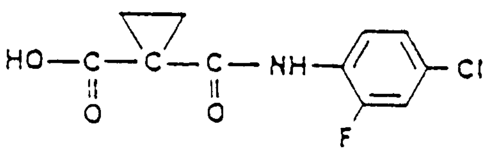

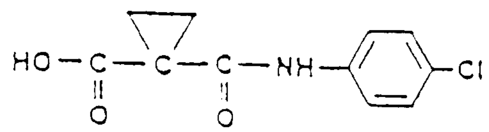

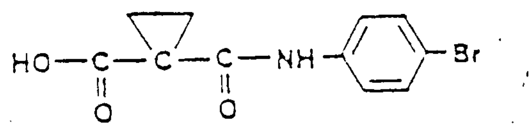

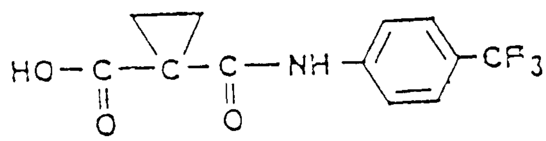

5. The plant growth regulator composition according to claim 1 in which the cyclopropylmalonanilate derivative compound is a derivative salt

6. The plant growth regulator composition according to claim 5 in which the derivative salt is selected from an alkali metal, an alkaline earth metal, ammonium, alkylammonium, polyalkylammonium, hydroxyalkylammonium, poly(hydroxyalkyl)ammonium or mixtures thereof

7. The plant growth regulator composition according to claim 1 in which the weight proportion of the ethylene response or ethylene-type response inducing agent to the cyclopropylmalonanilate derivative compound is from 0.1 : 1000 to 1000 : 0.1, preferably 1:500 to 500 : 1

8. A method for regulating plant growth which comprises applying to the plant a plant growth regulator composition according to anyone of claims 1 to 7.

9. The method for regulating plant growth according to claim 8 in which the synergistic plant growth regulator composition is applied to the plant at a rate of from 0.001 pounds per acre to 100 pounds per acre (which corresponds to 0,001 to 112 kg/ha ).

10. The method for regulating plant growth according to claim 8 in which the synergistic plant growth regulator composition is applied to the plant at a rate of from 0.01 pounds per acre to 15 pounds per acre (which corresponds to 0,01 to 17 kg/ha ), preferably 0.1 to 5 pounds per acre (which corresponds to 0,1 to 6 kg/ha ).

**Revendications**

1. Composition régulatrice de croissance des plantes, comprenant (i) un agent induisant une réponse à l'éthylène ou une réponse du type réponse à l'éthylène, choisi entre l'acide 2-chloréthylphosphonique, ses dérivés et les sels et esters correspondants, et (ii) un dérivé de cyclopropylmalonanilate répondant à la formule :

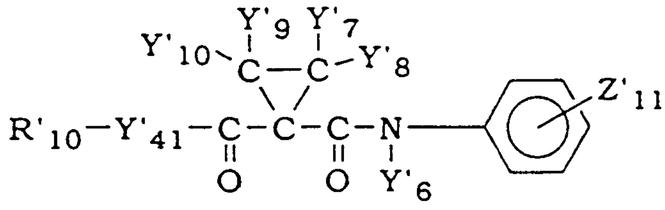

dans laquelle :

les substituants $Z'_{11}$ sont identiques ou différents et représentent un ou plusieurs substituants choisis entre l'hydrogène, un halogène et des groupes, substitués ou non substitués, halogénalkyle, polyhalogénalkyle, polyhalogénalkoxy, alkyle, alkoxy, alkylthio, alkylsulfonyle, alkylsulfinyle, aryle, aryloxy, arylthio, arylsulfonyle, nitro, cyano, dialkoxyphosphinyle, acyle, aroyle, alkoxycarbonyle, alkoxycarbonylalkyle, acylamino, sulfonylamino, alkylsulfonylamino, acyloxy, alcényle et -CH = CHCH = CH- ;

$Y'_6$ représente l'hydrogène ou un groupe alkyle ;

$Y'_7$, $Y'_8$, $Y'_9$ et $Y'_{10}$ représentent chacun indépendamment l'hydrogène, un halogène ou un groupe alkyle ;

$Y'_{41}$ représente O, S ou un groupe NH ;

$R'_{10}$ représente l'hydrogène, un groupe ammonium, alkylammonium, polyalkylammonium, hydroxyalkylammonium, poly(hydroxyalkyl)ammonium, un métal alcalin ou un métal alcalino-terreux ou un groupe, substitué ou non substitué, alkyle, hydroxyalkyle, alkoxyalkyle, alkoxycarbonylalkyle, alkylaminoalkyle, dialkylaminoalkyle, aryle, mercaptoalkyle, alkylthioalkyle, arylthioalkyle, aryloxyalkyle, alkylsulfonylalkyle, alkylsulfinylalkyle, acrylalkyle, aroylalkyle, dialkoxyphosphinylalkyle, diaryloxyphosphinylalkyle, hydroxyalkylthioalkyle, hydroxyalkylsulfonylalkyle, alkoxyalkylthioalkyle, alkoxyalkylsulfonylalkyle, poly(oxyalkylène)alkyle, cyanalkyle, nitroalkyle, alkylidène-amino, carbamoylalkyle, alkylcarbamoylalkyle, dialkylcarbamoylalkyle, aminoalkyle, acylaminoalkyle, acyloxyalkyle, alkoxycarbonylaminoalkyle, cyanaminoalkyle, carbamoyloxyalkyle, alkylcarbamoyloxyalkyle, dialkylcarbamoyloxyalkyle, alkoxycarbonyloxyalkyle, alkoxycarbonylthio-alkyle, aminosulfonylalkyle, alkylaminosulfonylalkyle ou dialkylaminosulfonylalkyle ;

dans laquelle la quantité de composé (ii) utilisée avec l'agent (i) a pour résultat l'obtention d'un mélange ayant un effet de régulation de croissance des plantes supérieur à la somme de l'effet de régulation de croissance des plantes de l'agent (i) et de celui du composé (ii) utilisés séparément.

**2.** Composition régulatrice de croissance des plantes suivant la revendication 1, dans laquelle les dérivés d'acide chloréthylphosphonique sont choisis dans le groupe comprenant :

1. Le bis(chlorure d'acide) de l'acide 2-chloréthylphosphonique
2. L'ester cyclique de pyrocatéchol de l'acide 2-chloréthylphosphonique
3. L'ester cyclique de 4-chloropyrocatéchol de l'acide 2-chloréthylphosphonique
4. Le diester éthylique et 2-hydroxyphénylique mixte de l'acide 2-chloréthylphosphonique
5. Le diester butylique et 2-hydroxyphénylique mixte de l'acide 2-chloréthylphosphonique
6. Le diester propynylique et 2-hydroxyphénylique mixte de l'acide 2-chloréthylphosphonique
7. Le monoester 2-chloréthylique de l'acide 2-chloréthylphosphonique
8. L'ester bis(phénylique) de l'acide 2-chloréthylphosphonique
9. L'ester cyclique de tétrachloropyrocatéchol de l'acide 2-chloréthylphosphonique
10. L'ester cyclique de saligénine de l'acide 2-chloréthylphosphonique
11. L'ester cyclique d'acide salicylique de l'acide 2-chloréthylphosphonique
12. Le monoester 3-hydroxyphénylique de l'acide 2-chloréthylphosphonique (qui existe sous forme polymérique)
13. L'ester bis(2-oxo-pyrrolidinylméthyle) de l'acide 2-chloréthylphosphonique
14. Le monoester o-hydroxyphénylique de l'acide 2-chloréthylphosphonique
15. Le diester isopropylique et 2-hydroxyphénylique mixte de l'acide 2-chloréthylphosphonique
16. Le diester octylique et 2-hydroxyphénylique mixte de l'acide 2-chloréthylphosphonique
17. Le diester hexadécylique et 2-hydroxyphénylique mixte de l'acide 2-chloréthylphosphonique
18. Le diester tridécylique et 2-hydroxyphénylique mixte de l'acide 2-chloréthylphosphonique
19. L'anhydride de l'acide 2-chloréthylphosphonique
20. L'acide 2-chloréthylphosphonique
21. Le diester butylique et 2-hydroxyphénylique mixte de l'acide 2-chloréthylphosphonique.

**3.** Composition régulatrice de croissance des plantes suivant l'une quelconque des revendications 1 et 2, dans laquelle les sels du dérivé d'acide 2-chloréthylphosphonique sont choisis dans le groupe suivant : les sels de sodium, d'aluminium, de zinc, de potassium et de lithium.

**4.** Composition régulatrice de croissance des plantes suivant la revendication 1, comprenant de l'acide 2-chloréthylphosphonique (éthéphon) et un dérivé de cyclopropylmalonanilate choisi parmi les composés répondant aux formules :

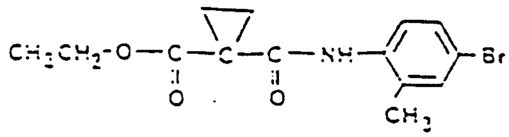

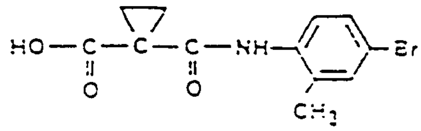

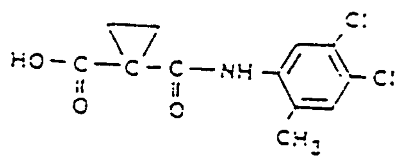

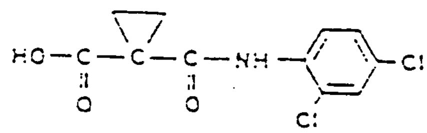

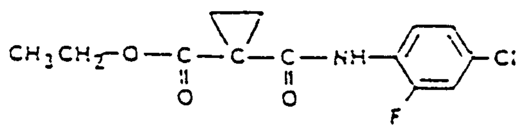

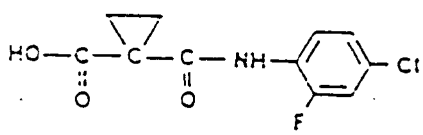

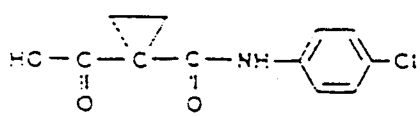

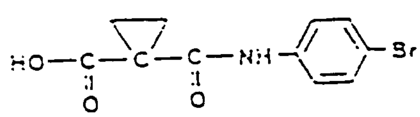

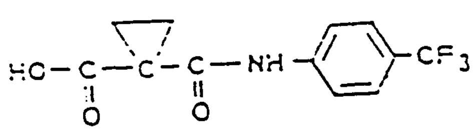

**5.** Composition régulatrice de croissance des plantes suivant la revendication 1, dans laquelle le dérivé de cyclopropylmalonanilate est un sel.

**6.** Composition régulatrice de croissance des plantes suivant la revendication 5, dans laquelle le sel du

dérivé est choisi entre un sel de métal alcalin, un sel de métal alcalino-terreux, un sel d'ammonium, un sel d'alkylammonium, un sel de polyalkylammonium, un sel d'hydroxyalkylammonium, un sel de poly-hydroxyalkyl)ammonium ou leurs mélanges.

7. Composition régulatrice de croissance des plantes suivant la revendication 1, dans laquelle le rapport pondéral de l'agent induisant une réponse à l'éthylène ou une réponse du type réponse à l'éthylène au dérivé de cyclopropylmalonanilate est compris dans l'intervalle de 0,1:1000 à 1000:0,1, de préférence de 1:500 à 500:1.

8. Procédé de régulation de croissance d'une plante, qui consiste à appliquer à la plante une composition régulatrice de croissance des plantes suivant l'une quelconque des revendications 1 à 7.

9. Procédé de régulation de croissance d'une plante suivant la revendication 8, dans lequel la composition synergique régulatrice de croissance des plantes est appliquée à la plante à un taux de 0,001 pound par acre à 100 pounds par acre (ce qui correspond à un taux de 0,001 à 112 kg/ha.

10. Procédé de régulation de croissance d'une plante suivant la revendication 8, dans lequel la composition synergique régulatrice de croissance des plantes est appliquée à la plante à un taux de 0,01 pound par acre à 15 pounds par acre (ce qui correspond à un taux de 0,01 à 17 kg/ha), de préférence de 0,1 à 5 pounds par acre (ce qui correspond à un taux de 0,1 à 6 kg/ha).

**Patentansprüche**

1. Zusammensetzung zur Regulierung des Pfanzenwachstums, die (i)ein Mittel zur Induktion einer Ethylenreaktion oder einer ethylenartigen Reaktion enthält, welches die 2-Chlorethylphosphonsäure, deren Derivate und entsprechende Salze und Ester, und (ii) eine Cyclopropylmalonanilatderivatverbindung der Formel:

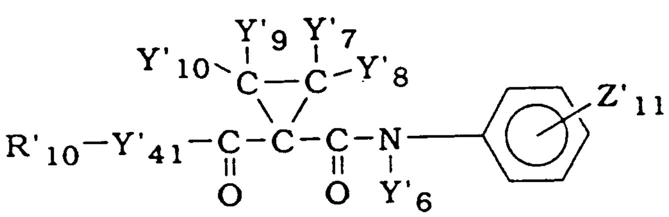

umfaßt, worin:

$Z'_{11}$ gleich oder unterschiedlich ist und ein oder mehrere Wasserstoff- oder Halogenatome, substituiertes oder unsubstituiertes Halogenalkyl, Polyhalogenalkyl, Polyhalogenalkoxy, Alkyl, Alkoxy, Alkylthio,Alkylsulfonyl, Aryl, Aryloxy, Arylthio, Arylsulfonyl, Nitro, Cyano, Dialkoxyphosphinyl, Acyl, Aroyl, Alkoxycarbonyl, Alkoxycarbonylalkyl, Acylamino, Sulfonylamino, Alkylsulfonylamino, Acyloxy, Alkenyl oder

-CH = CHCH = CH- bedeutet,

$Y'_6$ Wasserstoff oder Alkyl ist,

$Y'_7$, $Y'_8$, $Y'_9$ und $Y'_{10}$ unabhängig voneinander Wasserstoff, Halogen oder Alkyl sind,

$Y'_{41}$ O, S oder NH ist,

$R'_{10}$ Wasserstoff, Ammonium, Alkylammonium, Polyalkylammonium, Hydroxyalkylammonium, Poly-(hydroxyalkyl)ammonium, ein Alkali- oder Erdalkalimetall oder substituiertes oder unsubstituiertes Alkyl, Hydroxyalkyl, Alkoxyalkyl, Alkoxycarbonylalkyl, Alkylaminoalkyl, Dialkylaminoalkyl, Aryl, Mercatoalkyl, Alkylthioalkyl, Arylthioalkyl, Aryloxyalkyl, Alkylsulfonylalkyl, Alkylsulfinylalkyl, Acylalkyl, Aroylalkyl, Dialkoxyphosphinylalkyl, Diaryloxyphosphinylalkyl, Hydroxyalkylthioalkyl,Hydroxyalkylsulfonylalkyl, Alkoxyalkylthioalkyl, Alkoxyalkylsulfonylalkyl, Poly(oxyalkylen)alkyl, Cyanoalkyl, Nitroalkyl, Alkylidenamino, Carbamoylalkyl, Alkylcarbamoylalkyl, Dialkylcarbamoylalkyl, Aminoalkyl, Acylaminoalkyl, Acyloxyalkyl, Alkoxycarbonylaminoalkyl, Cyanoaminoalkyl, Carbamoyloxyalkyl,Alkylcarbamoyloxyalkyl, Dialkylcarbamoyloxyalkyl, Alkoxycarbonyloxyalkyl, Alkcxycarbonylthioalkyl, Aminosulfonylalkyl, Alkylaminosulfonylalkyl oder Dialkylaminosulfonylalkyl worin die Menge der Verbindung (ii), die mit dem Mittel (i) verwendet wurde, eine Mischung ergibt, die eine größere, das Pflanzenwachstum regulierende Wirkung

hat als die Summe der gesamten, das Pflanzenwachstum regulierende Wirkung von Mittel (i) und Verbindung (ii) , wenn diese allein verwendet werden.

**2.** Zusammensetzung zur Regulierung des Pflanzenwachstums nach Anspruch 1, worin die 2-Chlorethylphosphonsäurederivate aus der Gruppe ausgewählt werden, die umfaßt:
1. Das Bis(säurechlorid) von 2-Chlorethylphosphonsäure
2. Den cyclischen Pyrocatechinester von 2-Chlorethylphosphonsäure
3. Den cyclischen 4-Chlorpyrocatechinester von 2-Chlorethylphosphonsäure
4. Den gemischeten Ethyl- und 2-Hydroxyphenyldiester von 2-Chlorethylphosphonsäure
5. Den gemischten Butyl- und 2-Hydroxyphenyldiester von 2-Chlorethylphosphonsäure
6. Den gemischten Propinyl- und 2-Hydroxyphenyldiester von 2-Chlorethylphosphonsäure
7. Den 2-Chlorethylmonoester von 2-Chlorethylphosphonsäure
8. Den Bisphenylester von 2-Chlorethylphosphonsäure
9. Den cyclischen Tetrachlorpyrocatechinester von 2-Chlorethylphosphonsäure.
10. Den cyclischen Saligenester von 2-Chlorethylphosphonsäure.
11. Den cyclischen Salicylsäureester von 2-Chlore-thylphosphonsäure
12. Den 3-Hydroxyphenylmonoester von 2-Chlorethylphosphonsäure, (der in polymerer Form vorliegt)
13. Den Bis(2-oxo-pyrrolidinylmethyl)ester von 2-Chlorethylphosphonsäure
14. Den o-Hydroxyphenylmonoester von 2 Chlorethylphosphonsäure
15. Den gemischten Isopropyl- und 2-Hydroxyphenyldiester von 2-Chlorethylphosphonsäure
16. Den gemischten Octyl- und 2-Hydroxyphenylester von 2-Chlorethylphosphonsäure
17. Den gemischten Hexadecyl- und 2-Hydroxyphenyldiester von 2-Chlorethylphosphonsäure
18. Den gemischten Tridecyl- und 2-Hydroxyphenyldiester von 2-Chlorethylphosphonsäure
19. Das Anhydrid von 2-Chlorethylphosphonsäure
20. 2-Chlorethylphosphonsäure
21. Den gemischten Butyl- und 2-Hydroxyphenyldiester von 2-Chlorethylphosphonsäure.

**3.** Zusammensetzung zur Regulierung des Pflanzenwachstums nach einem der Ansprüche 1 oder 2, worin die Salze der 2-Chlorethylphosphonsäurederivate aus den folgenden Gruppen ausgewählt werden: Natrium, Aluminium, Zink, Kalium, Lithium.

**4.** Zusammensetzung zur Regulierung des Pflanzenwachstums nach Anspruch 1, welche 2-Chlorethylphosphonsäure (Ethephon) und ein Cyclopropylmalonanilat, ausgewählt aus den Verbindungen mit den Formeln

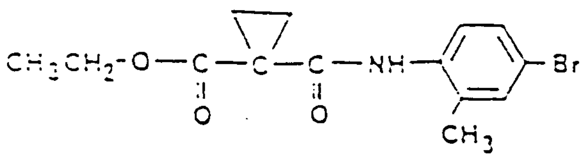

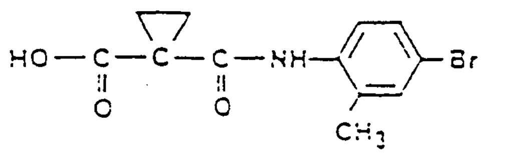

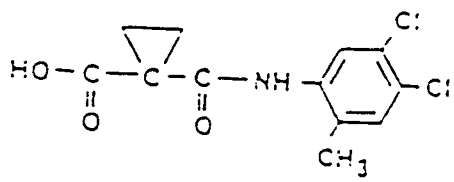

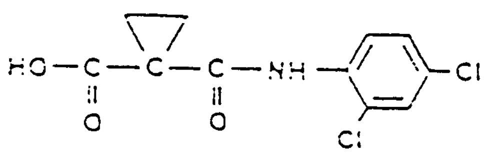

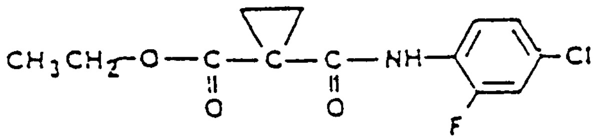

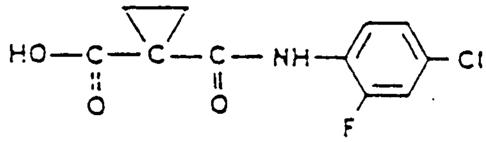

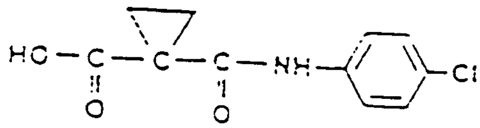

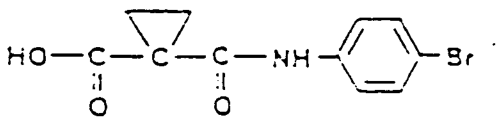

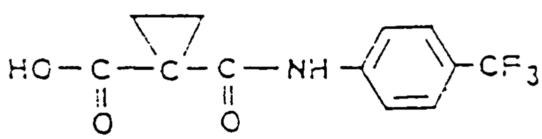

umfaßt.

5. Zusammensetzung zur Regulierung des Pflanzenwachstums nach Anspruch 1, worin die Cyclopropylmalonanilatderivatverbindung ein Derivatsalz ist.

6. Zusammensetzung zur Regulierung des Pflanzenwachstums nach Anspruch 5, worin das Derivatsalz ausgewählt wird aus einem Alkalimetall, einem Erdalkalimetall, Ammonium, Alkylammonium, Polyalkylammonium, Hydroxyalkylammonium, Poly(hydroxyalkyl)ammonium oder Mischungen von diesen.

7. Zusammensetzung zur Regulierung des Pflanzenwachstums nach Anspruch 1, worin das Gewichtsverhältnis des Mittels zur Induktion einer Ethylenreaktion oder ethylenartigen Reaktion zu der Cyclopropylmalonanilatderivatverbindung von 0,1:1000 bis 1000:0,1, vorzugsweise von 1:500 bis 500:1,beträgt.

8. Verfahren zur Regulierung des Pflanzenwachstums, welches das Aufbringen einer das Pflanzenwachstum regulierenden Verbindung nach einem der Ansprüche 1 bis 7 auf die Pflanze umfaßt.

9. Verfahren zur Regulierung des Pflanzenwachstums nach Anspruch 8, worin die synergistische Zusammensetzung zur Regulierung des Pflanzenwachstums auf die Pflanze in einer Menge von 0,001 Pounds pro Acre (das entspricht 0,001 bis 112 kg/ha) aufgebracht wird.

10. Verfahren zur Regulierung des Pflanzenwachstums nach Anspruch 8, worin die synergistische Zusammensetzung zur Regulierung des Pflanzenwachstums auf die Pflanze in einer Menge von 0,01 Pounds

pro Acre bis 15 Pounds pro Acre (das entspricht 0,01 bis 17 Kg/ha) , vorzugsweise 0,1 bis 5 Pounds pro Acre (das entspricht 0,1 bis 6 kg/ha) aufgebracht wird.